Europäisches Patentamt

European Patent Office

Office européen des brevets

(11) Publication number: **0 312 359 B1**

# EUROPEAN PATENT SPECIFICATION

(45) Date of publication of patent specification: **07.01.93** (51) Int. Cl.5: **A23C 19/05**

(21) Application number: **88309605.9**

(22) Date of filing: **13.10.88**

(54) **Cheese manufacture.**

(30) Priority: **13.10.87 GB 8723983**

(43) Date of publication of application:
**19.04.89 Bulletin 89/16**

(45) Publication of the grant of the patent:
**07.01.93 Bulletin 93/01**

(84) Designated Contracting States:
**AT BE CH DE ES FR GB GR IT LI LU NL SE**

(56) References cited:
**FR-A- 2 291 706**
**FR-A- 2 591 432**
**FR-A- 2 591 433**

**MILCHWISSENSCHAFT, vol. 42, no. 4, April 1987, pages 212-215, Munich, DE; J.M. BANKS et al.: "Increasing the yield of Cheddar cheese by the acidification of milk containing heat-denatured whey protein"**

**JOURNAL OF DAIRY SCIENCE, vol. 60, no. 8, 1977, pages 1236-1244; C.H. WHITE et al.: "Influence of heat treatment and methods of acidification of milk on manufacture and properties of cottage cheese"**

**JOURNAL OF DAIRY SCIENCE/ADSA AB-**

STRACTS, vol. V70, suppl. 1, 1987, page 67, paragraph D35, Champaign, IL, US; J.R. OC-AMPO et al.: "Cottage cheese from ultrafiltered skimmilk"

(73) Proprietor: **DANSCO DAIRY PRODUCTS LIMITED**
**New Pentland Creamery**
**Loanhead Midlothian EH20 9NY**
**Scotland(GB)**

(72) Inventor: **Reddy, Malireddy S.**
**6983 South Telleride Street**
**Aurra Colorado 80016(US)**
Inventor: **Mullen, John**
**Priorsford Villa Tweed Green**
**Peebles Scotland(GB)**
Inventor: **Washam, Clinton J.**
**1850 Craig Park Court**
**St. Louis Missouri 63146(US)**

(74) Representative: **Woodman, Derek et al**
**Frank B. Dehn & Co. European Patent Attorneys Imperial House 15-19 Kingsway**
**London WC2B 6UZ(GB)**

**Description**

BACKGROUND OF THE INVENTION

1. FIELD OF THE INVENTION-The invention relates to the increasing of cheese yield through incorporating a portion of the native whey proteins and residual fat in the cheese curd through preconditioning, high temperature treatment of the milk, and post acidification followed by culturing.

2. DESCRIPTION OF THE PRIOR ART-Prior art will be divided into two broad areas of technology: (A) cheese manufacture, and (B) chemical acidification.

A. Cheese manufacture.

There are over 400 different varieties of cheese. The basic steps of their production and the concepts behind those steps have been presented masterfully by E.R. Vedamuthu and C.J. Washam in the fourth chapter of Biotechnology, Volume 5 (Verlag Chernie, 1985). It would not be appropriate to repeat that material here. However, the manufacture of mozzarella will be given special treatment because it is particularly suited to the practice of this invention and, in fact, will serve as the model system to demonstrate the superiority of the invention over conventional practices.

A brief description of the commercial manufacture of mozzarella cheese is as follows: Raw milk is delivered to the processing plant, where it is stored in a milk silo. When processing is to begin, the milk is moved through a transfer line to a balance tank. From the balance tank, the milk is sent to a pasteurizer, which is operated as a two sided-heat exchanger. The cold milk continuously passes through the first side of the exchanger, where it is warmed to the desired maximum temperature. Then the milk passes through the second side of the exchanger, where it returns heat to the first side, cooling the pasteurized milk. The time of pasteurization can be controlled by the flow rate through the heat exchanger. For mozzarella cheese, the raw milk is pasteurized at 162 °F (72.2 °C) for 16 sec., cooled to 88° to 96 °F (31.1-35.6 °C), and then added to a stainless steel cheese vat. (Raw milk is currently a major cause of manufacturing problems because the composition of the milk will vary according to weather, breed of cows, season, geographic area, feed, etc.) At the beginning, middle, or at the end of fill, starter bacterial cultures (composed of coccus and rods) are added to the milk at pH 6.5 to 6.80. The milk is allowed to ripen for 15 to 45 min. At the end of the ripening period, a coagulator preparation (a proteolytic enzyme extracted from calf stomach or from microbial cultures) is added to the milk at the rate of about 3 oz./1000 lbs. (85 g/454 kg) of milk. The agitators are shut off after adding the coagulator and the milk is allowed to coagulate for a period of 15 to 30 min. After coagulation of the milk, the coagulum is cut into small cubes so that whey can be expelled from the curd. Then the curd is allowed to settle to the bottom of the vat without stirring for a period of 5 min. After heating for 5 min. the agitators are started and the curd is cooked to 98° to 118° F (36.7-47.8° C) over a period of 30 to 60 min. Then the curd is allowed to sit under whey or warm water or on cheddaring tables until pH drops to 5.1 to 5.40. If the pH of the curd is going to go lower (below pH 5.1) cold water (50° to 60°F 10-15.6°C) can be added to the curd to retard further production of acid by starter bacteria. After the curd attains the right pH, it is either cheddared and milled or put into a cooker (mixer and molder) containing water at 135° to 180°F (57.2-82.2°C) and mixed and molded into cheese bodies. It is an option at this stage either to add salt before the curd goes into cooker or to add salt to the mixer directly or to omit the addition of salt. After the curd is molded, it is cooled by suspending first in cold water, then, in cold brine (60 to 80% salt concentration). After 1 to 12 hrs. the brined cheese body is removed, diced or shredded and/or packaged and stored at 40°F (4.4°C) until used to make pizza pie (7 to 10 days after packing). Several problems are encountered with the traditional procedure. They are as follows.

The coccus to rod ratio dictates the body, stretch, browning, and oiling off of the cheese on pizza pie after it is baked. If the coccus population is too high, (10 to 20:1 c:r ratio), cheese will be tougher, does not stretch, and will exhibit browning after it is baked. On the other hand, if the rod population happened to be too high in the starter culture or in the cheese, the resultant mozzarella cheese will exhibit too much stretch, too much tenderness, and excessive oiling off, acid flavor, and a significantly decreased browning on pizza pie. In the production of high quality mozzarella one culture species cannot be used interchangeably for the other. So, it is imperative that coccus to rod ratio be controlled with utmost care in the starter tanks by varying the temperature of set. Even though the coccus and rod ratio is adjusted properly in the starter tanks, sometimes the ratios will change during the manufacture of cheese due to the presence of antibiotics, bacteriophage, and increase or decrease of total protein in the milk, pH of the milk, and source of the milk (breed of the cows) and temperature variations. Let us look at how these variations will influence the quality of cheese.

1. Initial pH of the Milk and its Effect on Quality of Cheese:

If the initial pH of the milk is 6.45 to 6.55, the coccus population will start growing during ripening until the pH decreases to 5.8. At this time stage the rod population will start growing along with coccus and, as the pH continues to decrease, the rod population will start building up. By knowing this behavior in making mozzarella cheese, coccus to rod ratios can be adjusted in the starter tank anywhere from 1:1 to 3:1 (c:r). However, if the pH of the raw milk happened to be 6.8 to 6.85, even though the c:r ratio is adjusted in the starter tank, still the coccus population will build up in higher concentration than the rods and thus will alter the functionality of mozzarella cheese. On the other hand, if the pH of the milk happens to be 6.3 to 6.4, the resulting products will have more rods, thus altering the quality of the product. This is why, even though the coccus to rod ratio is controlled in the starter tanks, due to the variance in initial pH of the milk (weekly, monthly or seasonal), uniform cheese quality is very hard to attain. A skilled cheese maker can control this problem by making extensive changes during manufacture. Such changes are cumbersome and in turn will alter the chemical properties of the finished product.

2. Total Protein Content of the Cheese and its Effect on Cheese Quality:

If the total protein in the milk is 3.1 to 3.2 (which is average), a coccus to rod ratio of 1:1 to 3:1 will drop the pH of the milk steadily and the quality of the cheese will be normal. On the other hand if the protein of the milk happens to be higher, such as 3.4 to 3.5, even though the c:r ratio in the starter tank remains at 1:1 to 3:1, the coccus population will dominate and thus will alter the functionality of the cheese. The coccus population will build up because of the buffering action of the protein coupled with the low ripening temperature. On the other hand if the protein content of the milk happens to be lower, i.e. 2.7 to 2.9, the rod population will dominate in the cheese and thus will alter the performance on pizza pie. This is the reason why there is a tremendous variation in the quality of the mozzarella cheese. Again, a skilled cheese maker can get around this problem by skillfully making changes during the manufacture of cheese. Still it is a hit and miss proposition and will endanger the ability of the cheese to meet compositional specifications of customers.

3. Bacteriophage and their Effect on the Quality of Mozzarella Cheese:

Bacteriophage (phage) is a bacterial virus which will lyse bacterial cells, making them unable to produce acid and flavor during the manufacture of cheese. Phage for both the coccus and rod cultures used in the manufacture of mozzarella cheese normally are found in the plant environment. Even though the coccus and rod cultures are protected in the starter tank, once they are added to the cheese milk, any phage present in milk will attack these organisms. If the coccus phage is present and destroys a majority of the cocci, the resulting cheese will be pasty and will exhibit an extensive oiling-off defect on pizza pie. On the other hand, if the rod phage destroys most of the rods, the resultant cheese will be tougher, will not stretch on pizza pie and will exhibit extensive browning. In addition, lysis of the starter bacteria by phage will cause extensive delays in the manufacturing time of the cheese, causing serious economic losses. Bacteriophage frequently are present in raw milk and are not killed by pasteurization at 162°F (72.2°C) for 16 sec. Consequently, in the dairy industry to make a high quality product consistantly is difficult.

4. Prevalence of Pathogens During Conventional Cheese Manufacture:

During traditional cheese manufacture (with starting milk pH 6.3 to 6.7), pathogenic bacteria such as Listeria, Staphylococci, and Salmonellae, can grow to higher numbers. This will happen especially when the starter bacteria are slow due to inherent culture characteristics, the presence of antibiotics such as penicillin, agglutinins, the presence of accidental sanitizing compounds in the milk, or due to the dreadful bacteriophage which will kill starter bacteria. Under these conditions, the pathogenic bacteria will grow faster because they prefer to grow above pH 6.0, and, also, they will not have any competition from the growth of dairy starter bacteria. Recently there have been many deaths reported due to the growth of pathogens in dairy products.

B. Chemical Acidification of Milk for Cheesemaking.

An obvious means of circumventing many of the problems encountered during the manufacture of cheese using bacterial cultures is the direct addition of an acidulant to the milk. Such addition of an acid (phosphoric, lactic, acetic, etc.) or an acidogen (glucono-delta-lactone, sodium bisulfate, etc.) must be done under carefully controlled conditions to prevent coagulation or agglomeration of the casein.

Queso blanco, Latin American white cheese, ricotta and other cheeses have been made commercially for over 25 years using vinegar, acetic, citric, lactic and phosphoric acids, and lemon juice as the acidulant.

The most commonly used method of direct acidification in the U.S.A. utilizes phosphoric acid as the primary acidulant to reduce the pH of cold (35°-55°F 1.7-12.8°C) milk to just short of the point of casein precipitation (pH 4.9 to pH 5.4). The milk then is warmed to about 90°F (32.3°C) and a secondary acidulant, the acidogen GDL, is added to bring the pH down to the isoelectric point slowly with the aid of a coagulating enzyme.

United States Patent No. 2,982,654 (Hammond and Deane, 1954) reveals the manufacture of "cheese curd" from chemically acidified milk. An acidogen such as glucono-delta-lactone was used in conjunction with a coagulator to produce a cuttable cheese curd. Microbial fermentation was eliminated. Major deterrents to commercial application are: the cost of using only GDL, the greatly prolonged coagulation time and the lack of flavor development in ripened cheeses, because of the absence of microbial enzyme systems.

United States Patent No. 3,298,836 (Ernstrom, 1967) teaches the acidification of cold (35°-50°F 1.7-10°C), high solids (14-16%) milk to pH 4.5-4.7 with free acid (mainly hydrochloric). The cold acidified milk is warmed without agitation to 70°-140°F (21.1-60°C) using special, expensive equipment to facilitate coagulation and curd formation for the manufacture of cottage cheese. No acidogen, such as GDL, or bacterial cultures are used. The process proved too unwieldy and expensive for commercial practice.

United States Patent No. 3,411,920 (Holder and Morgan, 1968) teaches the addition of acid to the vat shortly after the curd is cut to bring the pH of the whey down from pH 4.65-4.80 to pH 4.0-4.4 during the manufacture of soft, unripened cheese. In commercial practice today this is called "cooking acid" and is frequently used, but is not considered a process of "direct acidification."

United States Patent No. 3,620,768 (Corbin, 1971) relates to a method for manufacturing unripened cheeses, such as cottage, by direct acidification. Organic and inorganic acids are used to acidify cold milk (32°-45°F 0-7.2°C) to pH 4.88-5.20. The milk is then heated to 60°-100°F (15.6-37.8°C) before the addition of a coagulator and a final acidogen (GDL), which brings about a cuttable cheese curd. The main disadvantages are:

1. Acidification of cold milk (32°-45°F 0-7.2°C) requires a lengthy and costly heat up time.

2. In commercial practice the pH of the milk increases 0.1 to 0.3 pH units and requires monitoring with subsequent adjustments in the amount of GDL needed to set the vat.

3. The patent is limited in commercial application to unripened cheese varieties because there are no body, flavor and texture building microbial systems which are essential in the manufacture of ripened cheeses.

U.S. Patent No. 3,882,250 (Loter, et.al., 1975) teaches the same principles as U.S. Patent No. 3,620,768 (Corbin, 1971) except that an improved method of acid addition and mixing is utilized to allow milk to be acidified warm at 59°-86°F (15-30°C) instead of cold at about 32° to 45°F (0-7.2°C). The Loter patent claims teach acidification of milk at 61.7 to 86°F (16.5-30°C) and then "maintaining the acidified milk at about the same temperature and adding thereto-acidogen-and-proteolytic enzymes. "This simply means that the temperature of acidification and the setting temperature must be substantially the same. The main disadvantages of this patent or process are that:

1. The setting temperature of cottage cheese (as well as most other cheeses) is above 85°F (29.5°C) and would seem to require acidification at a minimum of 80°F (26.7°C) to be considered substantially the same.

2. More of the costly acidogen GDL is required because warm milk cannot be acidified to as low a pH with free acid as can cold milk.

It should also be noted that all 10 of the examples in the Loter patent (3,882,250), utilized diluted acids instead of concentrated acids to accomplish primary acidification.

U.S. Patent No. 4,374,152 (Loter, 1983) teaches a procedure for making acid cheese curd which is similar to that of U.S. Patent No. 3,882,250 (Loter, et. al., 1975) except that acid salts such as sodium bisulfate replaced the use of free acids and truly makes warm acidification economically attractive. A lower pH can be attained using sodium bisulfate as the primary acidulant as compared to using phosphoric acid under similar conditions. This reduces the amount of GDL required as the secondary acidulant and reduces the cost of the process. The main disadvantages are:

1. The resultant cottage cheese curd has proved to be of inferior quality.

2. Sodium bisulfate deteriorates metal lines, pumps, etc. and turns them black because of the reaction between iron and sulfuric acid.

3. Sodium bisulfate has suffered from mistakenly being linked to bisulfite.

U.S. Patent No. 4,352,826 (Pearline, et. al., 1982) teaches that the salt of an acid (sodium bisulfate) in U.S. Patent No. 4,374,152 can be replaced by a mixture of an acid salt and a free acid (sodium bisulfate plus sulfuric acid). To date, this patent has provided more strategic protection for Patent No. 4,374,152 than commercial potential. Acids such as free sulfuric and hydrochloric are considered to be too dangerous by many dairy plants.

As presented in this brief review of prior art, several patents teach the concept of making acid cheese curd by direct acidification, but most relate to soft, unripened cheeses. It is also noted that none of the patents employ, as an element of the invention, a high heat treatment so as to incorporate more whey protein into the cheese curd. Likewise none of the patents teach the preconditioning or pre-acidification concept prior to pasteurization. Likewise none of the patents combine the concepts of direct acidification and culturing to make cheeses and especially ripened cheeses.

The concept of high heat treatment alone, to increase cheese yield has been proposed:

U.S. Patent No. 3,316,098 (Noznick and Bundus, 1967) teaches that an increased yield of cheddar or cottage cheese can be realized from milk which has been given a heat treatment "substantially above" minimum pasteurization. This temperature was defined as 185°F (85°C) for at least 15 minutes or 300° to 305°F (148.9 to 151.7°C) for 1 second or less. The temperature used for a 15 second holding time was 255 °F.

This invention found little commercial application because the temperatures were too high, the times too long and the cheese produced was of inferior quality because of the cooked flavor, off color and body defects. Compared to the present invention, the Noznick patent does not utilize preconditioning nor employ a combination of direct acidification and culturing. Moreover, the present invention, through the mechanism of preconditioning, utilizes much less severe and damaging temperatures, i.e. 185°F (85°C) versus 255°F (124°C) for 16 seconds.

U.S. Patent No. 4,416,905 (Lundstedt and Corbin, 1983) teaches that buttermilk, sour cream and yogurt can be made by a combination of culturing and direct acidification. Culturing is the first phase of the production process and is allowed to progress until reaching pH 5.2-6.2 in order to develop the desired flavor intensity. Culturing then is followed by direct acidification to pH 4.7 or below using certain food grade acids.

This invention does not employ as part of its practice any of the following:

1. An unusually high pasteurization temperature.
2. A preconditioning step.
3. Acidogens such as glucono-delta-lactone or acid salts such as sodium bisulfate.
4. Inorganic acids such as phosphoric.
5. Normal to low levels of culture inoculum, i.e. less than 3%.
6. Application to any ripened or unripened cheese manufacture.
7. An initial step of acidification followed by culturing.
8. Finished product pH levels above 5.0.

The present invention utilizes the stage of direct acidification first to minimize the deleterious effects of pathogens, spoilage bacteria and phage. In addition, cultures grown at the lower pH ranges that result from this primary acidification stage tend to develop more powerful and extensive flavor and body producing systems that result in finished products of higher quality.

The culturing stage is incorporated because of its inherent importance in virtually all cheese varieties.

There are several reasons for the use of starter cultures in conjunction with the use of direct acidification:

1. They aid in the setting or coagulation of the milk by producing acid.
2. They help promote and control whey expulsion.
3. They contribute to the changes that take place during such stages as matting and cheddaring.
4. They govern the development of the characteristic flavor, body and texture in most varieties of cheese.
5. They reduce the effects of spoilage organisms during manufacturing and curing.
6. They function symbiotically with various adventitious organisms that characterize certain cheese varieties (such as Brevibacterium linens on brick and munster cheeses).
7. Cheeses such as mozzarella need starter cultures to decrease browning, improve stretch and tenderness in the finished product.

Other prior art known to the Applicants includes; MILCHWISSENSCHAFT, vol. 42, no.4, April 1987, pages 212-215, J. M. BANKS et al; JOURNAL OF DAIRY SCIENCE, vol. 60 no.8, 1977, pages 1236-1244, C. H. WHITE et al; FR-A-2 591 432 (ROQUETTE FRERES); and JOURNAL OF DAIRY SCIENCE/ADSA ABSTRACTS, vol. V70, suppl. 1, 1987, page 67, paragraph D35, J. R. OCAMPO et al. None of this art mentions the importance of milk pH prior to heat treatment.

## SUMMARY OF THE INVENTION

The primary object of this invention is to make cheese in a relatively faster time without any failures due to bacteriophage, by using a combination of direct acidification and culturing.

It is another object to eliminate the survival of Listeria moncytogenes, staphylococci, and salmonellae in the cheese.

It is another object to make top quality cheese without having to modify a standard manufacturing procedure because of protein, mineral, or pH variations in the raw milk.

It is another object to improve cheese yield by decreasing the loss of whey protein and whey fat into the cheese whey.

It is another object to decrease or eliminate the use of calcium chloride without any substantial delay in the coagulation time of the curd.

Another object is to decrease the usage of expensive coagulant (rennet) during the manufacture of cheese.

It is another object to increase the yield of directly acidified cheeses thru incorporation of whey proteins into the curd by preconditioning before pasteurization.

According to the invention, an improved method is disclosed for making cheese, of the type wherein cold, raw milk is heat treated, inoculated with starter culture, ripened, and treated with a coagulating agent to form a curd, after which the curd is cut, cooked, and, according to the type of cheese being produced, then cheddared, or pressed, or mixed and molded to form cheese bodies. The improvement is characterized in the steps of, first, preconditioning the cold, raw milk by lowering the pH prior to heat treating. Subsequently the preconditioned milk is heat treated and cooled. Then, cooled milk is post-acidified prior to inoculating with starter culture.

The same improved method steps can be applied to producing Cottage cheese, wherein a coagulating agent generally is not added. In addition, if a supply of milk having sufficiently low pH is obtainable, the preconditioning step may be unnecessary.

In its broadest aspect the invention provides a method of making cheese which includes the steps of:

a) where necessary, preconditioning cold, raw milk by lowering the pH to between 6.0 to 6.5 prior to heat treating;

b) heat treating the said milk at a temperature from 162° to 190°F (72.2° to 87.8°C); and

c) post-acidifying the milk prior to inoculating with a starter culture or acidogen or a slow release acidulant.

## DESCRIPTION OF THE PREFERRED EMBODIMENT

Cold raw milk is acidified using any food grade organic or inorganic acid, alone or in any combination, to achieve pH 6.0 to 6.5 preferably pH 6.3-6.4. Such acidification can also be accomplished using bacterial fermentation, acidogens, or other food grade substances that promote pH depression or alter the free mineral balance (especially calcium) in milk. This step is called "preconditioning" and is preferably accomplished by using a metering pump, an inline injector and an inline static mixer to mix a controlled amount of liquid acid with cold milk under vigorous agitation.

Preconditioned milk may be stored in a tank or silo or it may be pasteurized immediately. In commercial cheese manufacture, the pasteurization temperatures are rigidly restricted to near the minimum allowed by regulatory agencies. Many cheeses are normally made from heat treated milk to avoid a heat treatment as severe as even minimum pasteurization. This is due to the detrimental effects of heat on the protein and mineral components of the milk and the reduction in the quality of cheese made from such milk. However, preconditioning permits the use of higher pasteurization temperatures (165°-190°F 73.9-87.8°C) which results in the incorporation of about 15 to 50% of the whey protein without experiencing a decrease in cheese quality.

The preconditioned, pasteurized milk is then cooled to 60°-100°F (15.6-37.8°C), depending on the cheese variety and then further acidified to pH 4.95 to 5.9, depending on the cheese variety. This acidification after pasteurization is termed "post acidification" and is carried out using organic or inorganic acids, acidogens or other food grade substances that increase the hydrogen ion concentration either alone or in any combination and either diluted or concentrated and either liquid, solid, encapsulated or coated. Preferably a liquid acid is metered into the cooled milk through an injector followed by vigorous mixing through an inline mixing device.

Post acidification for the manufacture of a pasta filata cheese such as mozzarella would be to pH 5.4-6.0, preferably to pH 5.5-5.8 and most preferably 5.65-5.75. After post acidification the milk is warmed, if necessary to 88° to 96°F (31.1-35.6°C), and then the cheese starter culture is added at the rate of 0.75 to 2.5 percent. The starter cultures used here could either be traditional coccus and rods or lactic cultures, or a combination of coccus and rods and lactic cultures. Wherever coccus and rod cultures are used, the coccus to rod ratio is adjusted to 2:1 to 15:1 ratio, preferably to 5:1 ratio. The ratios are adjusted according to the quality of cheese preferred. The starter cultures could either be grown in starter media such as phage resistant phosphated or citrated media or in reconstituted 12.0% non fat dry milk medium. Sometimes frozen concentrated cultures or lyophilized cultures or genetically altered natural or laboratory prepared cultures also can be used to inoculate the post acidified milk. Then the milk is allowed to ripen for 15 to 45 min. The coagulant is added at the rate of 0.5 oz. to 3 oz./1000 lbs. (14.2-85.2 g/454 kg) of milk, preferably to 0.75 to 1.5 oz./1000 lbs. (21.3-35.5 g/454 kg) of milk. The milk is allowed to coagulate at 88° to 96°F (31.1-35.6°C), for a period of 15 to 30 min. At the end of coagulation, the curd is cut into cubes and allowed to settle for 5 min. Using gentle agitation, the entire contents of the vat are cooked to 98° to 118°F (36.7-47.8°C), preferably to 108° to 112°F 42.2 to 44.4°C) within a time span of 20 to 45 min. preferably for 30 min. The curd is allowed to submerge under whey until pH drops to 5.2 to 5.9, preferably to pH 5.3-5.5 and then is mixed and molded into cheese bodies. Alternatively the curd can be placed on tables and allowed to come down to pH 5.2 to 5.9 or can also be cheddared and then milled at pH 5.2 to 5.9, preferably at pH 5.1 to 5.4 and then mixed and molded into the cheese bodies. The curd can either be salted on the tables or in the mixer-molder or after molding. After the cheese is molded, it is placed in cold water for a period of 1/2 to 3 hours and then transferred to a cold saturated brine. The cheese bodies are brined until the final concentration of salt in the cheese is roughly around 1.0 to 2.0%, preferably 1.5%. The cheese is taken out of the brine and can be diced or shredded and packed, or it can be packaged in block form and stored at 35° to 45°F (1.7-7.2°C) or it can be frozen. The cheese prepared using this system is ready to be used on pizza pie on the second day unlike the traditional cheese, which will not melt until it has 5 to 10 days of age. The method of present invention is further illustrated by the following examples:

Example 1 - - The following example is presented to show the effect of initial pH of the milk, heat treatment, and pH of the milk at the time of renneting on the whey protein retention. The pH of the cold, raw milk (4°C) is adjusted to the appropriate pH using a combination of acetic and phosphoric acid After adjusting the pH, the milk is pasteurized to the appropriate temperature. The holding time of the pasteurizer was adjusted to 16 sec. After pasteurizing, the milk is automatically cooled to 75°F (23.9°C) and acids are injected into the milk to adjust the pH down to 5.70. A sample of the milk where the pH is not adjusted after the heat treatment served as a control. In the cheese vat, the temperature of the milk is raised to 90°F (32.3°C) and coagulant is added at the rate of 2 oz./1000 lbs (56.8 g/454 kg) of milk. After the curd coagulation, the curd mass was cut using a 1/4 inch 0.64 cm knife to arrive at the uniform size cubes. The curd particles were allowed to settle for 5 min. and whey was drawn at that stage for the protein determination. The proteins were determined by using dye binding procedure using orange "G". In the particular example, the initial pH's of the cold, raw milks were adjusted to 6.30, 6.45 and 6.50. The heat treatments selected were 162°F (72.2°C) and 185°F (85°C) for 16 sec. The results of this example are presented in Table 1. It is obvious from these data that preacidification of milk has significant effect on increasing the whey protein retention provided that the heat treated milk (185°F (85°C) for 16 sec.) is post acidified below pH 6.4 and perhaps to pH 5.7 using the food grade acetic or vinegar and/or phosphoric acid. In the similarly heat treated milk when it is not post acidified, the whey protein retention is significantly decreased. The preacidification, high temperature treatment (185°F (85°C) for 16 sec.), and post acidification to pH 5.70 prior to renneting had a pronounced effect on the retention of whey protein and thus increases the cheese yields. In some instances even though milk is not preacidified, whey protein retention is observed provided milk is heat treated to about 185°F (85°C) for 16 sec. However, it is a must that such milk should be post acidified to below pH 6.4 and preferably pH 5.7 prior to renneting. Again, the whey protein retention is significantly better if the same milk is preacidified, heat treated to about 185°F (85°C), and then post acidified to about pH 5.70 prior to renneting.

TABLE I

| No. | pH of the Milk prior to Heat Treatment | Heat Treatment | pH of the Milk prior to Renneting | Percentage of Whey Protein in Whey |
|---|---|---|---|---|
| 1 | 6.50 | 162°F (72.2°C) for 16 sec. | 6.40 | 0.74 |
| 2 | 6.50 | 162°F (72.2°C) for 16 sec. | 5.70 | 0.70 |
| 3 | 6.45 | 162°F (72.2°C) for 16 sec. | 5.70 | 0.69 |
| 4 | 6.30 | 162°F (72.2°C) for 16 sec. | 5.70 | 0.69 |
| 5 | 6.50 | 185°F (85°C) for 16 sec. | 6.40 | 0.66 |
| 6 | 6.50 | 185°F (85°C) for 16 sec. | 5.70 | 0.56 |
| 7 | 6.45 | 185°F (85°C) for 16 sec. | 5.70 | 0.53 |
| 8 | 6.30 | 185°F (85°C) for 16 sec. | 5.70 | 0.45 |

Example 2 - - In this example, the effect of culturing has been evaluated in addition to the preacidification and high temperature treatment (185°F (85°C) for 16 sec.) on the retention of whey proteins in the cheese curd. The medium selected for the growth of the coccus and rod mozzarella cheese starter cultures was Italiano. The medium was reconstituted to 7.0% solids and heat treated to 190°F (87.8°C) for 1 hour and cooled to 110°F (43.3°C). Coccus and rod cultures were inoculated into the medium and allowed to incubate until pH dropped to 5.0. At this stage, the medium was neutralized to pH 6.2 using sodium hydroxide and was further allowed to incubate until pH dropped to 4.2. The culture was cooled to 60°F (15.6°C) and used as a starter culture to inoculate the milk (1.5%) after postacidification to pH 5.70 using vinegar at 32°C. The milk was incubated with culture for 30 min. and then it was renneted using single strength rennet at the rate of 1 1/2 oz./1000 lbs. (42.6 g/454 kg) of milk. After coagulation of the curd it was cut into 1/4 inch (0.64 cm) cubes and then whey was extracted after 5 min. of healing. The whey samples were analyzed for protein.

In this example the initial pHs of the milk selected were 6.4, 6.6, and 6.85. The post acidification pH was 5.70. The results of this experiment are presented in TABLE 2. The results once again depict that the heat treatment alone (185°F (85°C) for 16 sec.) was not enough to retain the whey protein in the curd. The preacidification and post acidification were the key factors in retaining the additional protein in the curd mass. Also, it is quite obvious that the addition of starter culture to the cheese milk had a pronounced effect on the additional whey protein retention. A partial explanation can be the pH lowering effect of bacteria or the physical addition of lactic and phosphoric acid already present in the starter culture growth medium (Italiano) which is added to the cheese milk and causes a change in the mineral balance. Furthermore, the evaluation of cheese curd revealed that starter cultures greatly improved the flavor and texture. When only acid is used, there was no flavor at all in the curd.

TABLE 2

| No. | pH of the Milk prior to Heat Treatment ( 185° 85°C for 16 sec. ) | Percentage Addition of Starter Culture to Heat Treated Milk | pH of the Milk prior to Renneting | Percentage of Whey Protein in Whey |
|---|---|---|---|---|
| 1 | 6.85 | NONE | 6.80 | 0.75 |
| 2 | 6.85 | NONE | 5.70 | 0.62 |
| 3 | 6.60 | NONE | 6.53 | 0.63 |
| 4 | 6.60 | NONE | 5.70 | 0.52 |
| 5 | 6.40 | NONE | 5.70 | 0.47 |
| 6 | 6.60 | NONE | 6.48 | 0.64 |
| 7 | 6.60 | 1.5 PERCENT | 6.40 | 0.63 |
| 8 | 6.60 | 1.5 PERCENT | 5.70 | 0.46 |
| 9 | 6.40 | 1.5 PERCENT | 5.70 | 0.37 |

Example 3 - - The effect of heat treatment of milk and type of acids used for post acidification was evaluated on the retention of whey proteins and fat in the cheese curd. The temperatures selected for this study were 162°F (72.2°C) and 185°F (85°C) for 16 sec. The acidulants used were acetic acid, phosphoric acid and combinations of acetic and phosphoric acid. In all the trials, the postacidification was carried to pH 5.70. The rest of the procedure was the same as in examples 1 and 2. The results of this experiment are presented in TABLE 3. From these data, it is obvious that more fat can be retained in the cheese along with the whey proteins. Phosphoric acid has more fat retention value than the acid. A combination of phosphoric and acetic acid, used as post acidulants, on milk heat treated to 185°F (85°C), has a beneficial effect on trapping both the whey protein and fat into the curd mass. Both the fat and protein retention are higher when the milk is heat treated at 185°F (85°C) for 16 sec. than at lower heat treatment temperatures. This experiment also demonstrates that both organic and inorganic acids are functional in this invention.

TABLE 3

| No. | Heat Treatment of the Milk | Type of Acid Used | Percentage of Fat in Whey | Percentage of Whey Protein in Whey |
|---|---|---|---|---|
| 1 | 162°F (72.2°C) for 16 sec. | ACETIC | 0.40 | 0.75 |
| 2 | 185°F (85°C) for 16 sec | ACETIC | 0.30 | 0.59 |
| 3 | 162°C (72.2°C) for 16 sec. | PHOSPHORIC | 0.15 | 0.72 |
| 4 | 185°F (85°C) for 16 sec | PHOSPHORIC | 0.10 | 0.42 |
| 5 | 162°F (72.2°C) for 16 sec. | ACETIC PLUS PHOSPHORIC | 0.25 | 0.69 |
| 6 | 185°F (85°C) for 16 sec. | ACETIC PLUS PHOSPHORIC | 0.15 | 0.45 |

Example 4 - - The effect of heat treatment and heat treatment plus post acidification upon the survival and proliferation of Streptococcus thermophilus bacteriophage was evaluated in this experiment. Active bacteriophage preparation was inoculated into phage free raw milk to arrive at a final concentration of 4000/ml. This was verified by plaque assay. The milk with phage was heat treated to 162°F (72.2°C) 175°F (79.4°C) and 185°F (85°C) for 16 sec. The heated milk samples were cooled to 90°F (32.3°C) and they were divided into two equal potions. To one portion, vinegar was added to arrive at pH 5.7. Both the samples of milk (with and without post acidification) were inoculated with active coccus and rod culture and were incubated at 90°F (32.3°C) for 30 min. Then the temperature of the milk was raised 104°F (40°C) and held at that temperature for an additional 2 hours. At the end of the incubation, all the tubes were titrated to determine the bacteriophage concentration. The bacteriophage selected for this study is a coccus

EP 0 312 359 B1

phage which is specific to the coccus component of the coccus and rod culture used as starter. The idea behind this experiment is to study the following:

1. The effect of heat upon survival of bacteriophage.

2. The effect of post acidification pH upon the revival of the thermally injured bacteriophage upon further incubation.

The results of this study are presented in TABLE 4. It is obvious from these data that the traditional pasteurization temperature of 162°F (72.2°C) for 16 sec. could not inactivate the coccus bacteriophage. However, post acidifications of the milk heat treated to 162°F (72.2°C) for 16 sec., totally retarded the revival of the thermally injured bacteriophage. The temperatures 175° and 185°F (79.4° and 85°C) definitely exhibited a drastic destructive effect upon bacteriophage. This has a tremendous significance in that the bacteriophage present in the regular cheese milk cannot be inactivated by the ordinary pasteurization temperature and, thus, this dreadful virus can inactivate the starter bacteria in the cheese vat. So, using our proposed invention bacteriophage can be brought under control, irrespective of whether it is present in raw milk or appeared as contaminant after pasteurization of milk.

## TABLE 4

| No. | Heat Treatment of the Milk | Milk pH at the time of Inoculation | Initial Phage Counts/Gram, Prior to Heat Treatment | Final Phage Count/Gram at the End of Incubation |
|---|---|---|---|---|
| 1 | (72.2°C) 162°F for 16 sec. | 6.5 | 4000 | 220 |
| 2 | (72.2°C) 162°F for 16 sec. | 5.7 | 4000 | <10 |
| 3 | (79.4°C) 175°F for 16 sec. | 6.5 | 4000 | <10 |
| 4 | (79.4°C) 175°F for 16 sec. | 5.7 | 4000 | <10 |
| 5 | (85°C) 185°F for 16 sec. | 6.5 | 4000 | <10 |
| 6 | (85°C) 185°F for 16 sec. | 5.7 | 4000 | <10 |

Example 5 - - The effect of heat treatment employed in the current embodiment upon the survival of Listeria monocytogenes was evaluated. To the raw milk Listeria monocytogenes was added to arrive at a population of 28 to 34 x 10⁴/Ml. Then it was divided into 3 fractions and was heat treated at 165°, 175°, and 185°F (73.9, 79.4 and 85°C) for 16 sec. Immediately after the heat treatment Listeria monocytogenes counts were determined. The results of this study are presented in TABLE 5. It is apparent from the data when high concentrations of Listeria are present in raw milk, the normal pasteurization temperatures are inadequate to destroy these organisms. The temperatures where we can complex the whey proteins to caseins are found to be adequate to destroy this dreadful pathogen.

TABLE 5

| No. | Heat Treatment of the Milk | Initial Listeria Monocytogenes Count/Gram Prior to Heat Treatment | Final Listeria Monocytogenes Count/Gram After Heat Treatment |
|---|---|---|---|
| 1 | 162° F (72.2° C) for 16 sec. | $34 \times 10^4$ | 20 |
| 2 | 175° F (79.4° C) for 16 sec. | $28 \times 10^4$ | < 10 |
| 3 | 185° F (85° C) for sec. | $28 \times 10^4$ | <10 |

Example 6 - - The experiment is designed to see if the current procedure described in this application has any detrimental effect on Listeria. The Listeria impregnated raw milk was divided into several fractions. They were subject to three different heat treatments i.e. 162° F, 175° F, and 185° F (72.2, 79.4 and 85° C). After the heat treatment, the milk was cooled to 90° F (32.3° C) and it was further divided into four fractions. One served as the control, the second fraction was adjusted to pH 5.70 using acetic acid, the third fraction was inoculated with coccus and rod culture without any post acidification, and the fourth fraction was post acidified to pH 5.70 and then inoculated with coccus ad rods. All four samples were incubated at 90° F (32.3° C) for 30 min. and then the temperature was raised to 104° F (40° C) and held at that temperature for an additional two hours. At the end of incubation, the samples were inoculated into the Listeria enrichment broth and incubated for 1 day and 7 days. At the end of the enrichment periods, the Listeria counts were determined. The similar procedure was repeated with 175° F (79.4° C) and 185° F (85° C) heat treatments. The results of these experiments are presented in TABLE 6. These results clearly indicate that 162° F (72.2° C) for 16 sec. (the normal pasteurization temp. used with cheese making) is inadequate to inactivate Listeria. However using our current procedure. i.e. post acidification to pH 5.70 and then inoculating with starter cultures, inactivated the thermally injured Listeria organisms. The post acidification alone or culturing without post acidification treatment were inadequate to inactivate the growth of thermally injured Listeria organisms. However, heat treatments at 175° F (79.4° C) or 185° F (85° C) totally inactivated the Listeria organisms.

TABLE 6

| No. | Heat Treatment of the Listeria Impregnated Milk | Milk pH Prior to Incubation | Addition of Starter Culture Prior to Incubation | Listeria Monocytogenes Counts/Gram: | | |
|---|---|---|---|---|---|---|
| | | | | | After Heat Treatment | |
| | | | | Prior to Heat Treatment | With 24 hr. Enrichment | With 7 Day Enrichment |
| 1 | 162° F (72.2° C) for 16 sec. | 6.50 | None | $130 \times 10^4$ | 10 | 400 |
| 2 | 162° F (72.2° C) for 16 sec. | 5.70 | None | $130 \times 10^4$ | <10 | 400 |
| 3 | 162° F (72.2° C) for 16 sec. | 6.50 | 1.5 Percent | $130 \times 10^4$ | 10 | 20 |
| 4 | 162° F (72.2° C) for 16 sec. | 5.70 | 1.5 Percent | $130 \times 10^4$ | <10 | <10 |
| 5 | 175° F (79.4° C) for 16 sec. | 6.50 | None | $130 \times 10^4$ | <10 | <10 |
| 6 | 175° F (79.4° C) for 16 sec. | 5.70 | 1.5 Percent | $130 \times 10^4$ | <10 | <10 |
| 7 | 185° F (85° C) for 16 sec. | 6.50 | None | $130 \times 10^4$ | <10 | <10 |
| 8 | 185° F (85° C) for 16 sec. | 5.70 | 1.5 Percent | $130 \times 10^4$ | <10 | <10 |

Example 7 - - This example is designed to check the effect of our proposed procedure on the growth of Listeria, salmonella, and staphylococci added to the milk after heat treatment. In this example, the milk was heat treated at 162° F (72.2° C) for 16 sec., cooled to 90° F (32.3° C) and divided into several fractions. The active salmonella, staphylococci and Listeria organisms were inoculated separately into heat treated milk.

Then each fraction was further subdivided into four fractions. And they were treated using the same procedure outlined in Example 6, except the samples were incubated at 99°F (37.2°C) for 4 hours. At the end of the incubation, the samples were analyzed for the enumeration of salmonella, staphylococci, and Listeria. The results are presented in TABLE 7. It clearly proves that neither preacidification alone nor culturing without preacidification alone are adequate to prevent the multiplication of these pathogenic micro-organisms. Using our proposed procedure, i.e. acidification to pH 5.70, inoculating with starter cultures, and then incubating for 4 hours at 99°F (37.2°C) had a pronounced effect on preventing the multiplication of these pathogenic micro-organisms. This has a tremendous public health significance, considering the number of food poisoning episodes we have had in the past few years.

## TABLE 7

| No. | Bacterial Strain | Initial Bacterial Count/Gram Prior to Post Acidification And/or Culturing | Final Bacterial Count/Gram After Culturing Without Post Acidification | Final Bacterial Count/Gram With Post Acidification But No Culturing | Final Bacterial Count/Gram With Post Acidification And Culturing |
|---|---|---|---|---|---|
| 1 | LISTERIA MONOCYTO-GENES | $32 \times 10^3$ | $260 \times 10^3$ | $230 \times 10^3$ | $36 \times 10^3$ |
| 2 | SALMONELLA TYPHIMURIUM | 20 | $100 \times 10^1$ | 130 | 15 |
| 3 | STAPHYLO-COCCUS AUREUS | 10 | 170 | 56 | 3 |

Example 8 - - To evaluate the effectiveness of calcium chloride on cheese made using our current procedure, two levels of this approved chemical were tried. The mozzarella cheese was manufactured by starting with cold, raw milk. Initially cold, raw milk was acidified to pH 6.45 using a combination of acetic phosphoric, and lactic acid. The milk was pasteurized to 175°F (79.4°C) for 16 sec. and was cooled to 70°F (21.1°C). At that stage it was post acidified by injecting a combination of vinegar, phosphoric, and lactic acids; then, post acidification was carried to pH 5.70. The milk after post acidification was warmed to 90°F (32.3°C). At this stage lactic starter culture grown in phage resistant medium was used at the rate of 1.0 percent. The lactic starter culture used in this example was made of strains of Streptococcus lactics, Streptococcus cremoris and other lactic group of streptococci, perhaps with an inclusion of Leuconostoc citrovorum. The milk was allowed to ripen for 30 min. Halfway thru the ripening, the appropriate amount(s) of calcium chloride was added. Calcium chloride was not added to the control cheese vat. At the end of the ripening, diluted rennet enzyme (a combination of veal and microbial) was added at the rate of 3 oz/1000 lbs. (85.2 g/454 kg) of milk. After the coagulation of milk, the gel was cut into 1/4 inch (0.64 cm) pieces, allowed to settle for 5 min. and was cooked to 104°F (40°C) within a span of 30 min. Then the whey was drained partially and the rest of the mass was transferred onto a table and it was cheddared. When the pH of the curd was lowered to 5.3 to 5.4, it was mixed and molded into cheese bodies. The cheese bodies thus obtained were cooled in cold water and then brined in a salt solution and shredded for evaluation on pizza. The two concentrations of calcium chloride tested were 0.01 and .02 percent. The length of coagulation was observed closely. After the manufacture of cheese, the firmness was evaluated on the second day. The experimental cheese was shredded and used at the rate of 5oz. per 12 inch 142 g/30 cm pizza. It was baked for 6 minutes at 580°F (304°C). The pizza was cooled for two minutes and evaluated for the melt, browning, oiling-off, stretch and chewiness. The melt was determined by appearance. The browning was determined by counting the number of brown or burn spots on the pizza pie. In addition, the size of the brown spots were also observed. The oiling-off was checked by tilting the pizza to observe the flow of free oil. The stretch was measured by pulling a fraction of cheese from pizza pie. A stretch greater than 6 inches (15 cm) was considered excellent. And stretch less than 2 inches (5 cm) was considered poor. The chewiness was determined by masticating part of the melted cheese. If the cheese could be broken to smaller pieces with 10 to 15 strokes in mouth, it was considered tender or not chewy. If the cheese gave a bubble gum effect in the mouth it was considered tough.

The results of these experiments are presented in TABLE 8. It is clear from these data that calcium chloride is not required to make cheese using our proposed new procedure. Part of the reason being the release of native milk calcium from casein due to the post acidification step. Also, such a cheese was normal in every respect to the cheese made using different levels of calcium chloride.

## TABLE 8

| No. | Conc (5) of Added Calcium Chloride In Cheese Milk | Coagulation Time | Body of the Cheese | Functionality of the Cheese on Pizza Pie: | | | | |
|---|---|---|---|---|---|---|---|---|
| | | | | Melt | Browning | Oiling-Off | Stretch | Chewiness |
| 1 | None | 20 Min. | Firm | Good | Slight | None | Excellent | None |
| 2 | 0.01 | 23 Min. | Firm | Good | Slight | None | Excellent | None |
| 3 | 0.02 | 26 Min. | Firm | Good | Slight | None | Excellent | None |

Example 9 - - To evaluate the level of use of rennet on cheese made using our current procedure, four levels of rennet were tried. The cheese making procedure was the same as in Example 8 except for the following:

1. The milk was heat treated to 180°F (82.2°C) for 16 sec.

2. The pre and post acidification of milk was carried out by using 50:50 mixture of vinegar and phosphoric acid.

3. The high temperature streptococcus thermophilus and lactobacillus bulgaricus cultures were used as starters. They were grown in phage resistant media and the ratio of coccus to rod was adjusted to 5:1.

The levels of rennet tried were 3oz., 2oz., 1 oz., and 0.75 oz. per thousand pounds (85,57,28 and 21 g

15

per 454 kg) of milk. The coagulation times were monitored. Also, the firmness of the cheese was evaluated on the second day. The cheese was evaluated on pizza pie using the same criteria outlined in example 8. The results of this experiment are presented in TABLE 9. It is obvious from these data that the rennet level can be significantly decreased (up to 75%) with the use of our proposed new procedure. The decrease of rennet usage slightly extended the coagulation time. This is not commercially significant because during the normal cheese manufacture renneting time can go as long as 30 to 35 min. It is preferable to have slightly longer renneting time to improve the moisture retention and quality of the cheese.

## TABLE 9

| No. | Amount of Rennet/1000 lbs. of milk (454 kg) | Coagulation Time In Minutes | Firmness of the Cheese | Cheese on Pizza Pie: | | | |
|---|---|---|---|---|---|---|---|
| | | | | Stretch | Melt | Oiling-Off | Chewiness |
| 1 | 3 oz. (85 g) | 20 min. | Slightly Firm | Excellent | Excellent | Excessive | None |
| 2 | 2 oz. (56 g) | 23 min. | Firm | Excellent | Good | Slight | None |
| 3 | 1 oz. (28 g) | 25 min. | Firm | Excellent | Good | None | None |
| 4 | 0.75 oz. (21 g) | 28 min. | Firm | Excellent | Good | None | None |

Example 10 - - Mozzarella cheese was made using starter with different coccus to rod ratios. The coccus to rod ratios were adjusted with the aid of temperature. The coccus and rod cultures (supplied by Chris Hansens Laboratories) were grown in Italiano medium. To arrive at 1:1 ratio the medium was set at 110° to 112°F (43.3 to 44.4°C), whereas to arrive at 10:1 ratio, the medium was set at 106°F (41.1°C). The starter was inoculated into the test milk at the rate of 1.0 to 2.0 percent. The cheese make procedure was the same as in example 8 except for the following:

1. The cheese milk was preacidified, wherever it was required, using the appropriate acid or acids combination.

2. The cheese milk was heat treated at 185°F (85°C) for 16 sec.

3. The post acidification was carried out using different acid or acids combination, wherever it was required, to arrive at pH 5.4 to 6.0

Two ratios that were checked in this example were: 1:1 and 10:1, coccus: rod ratio. Acids that were included in this example were: acetic, phosphoric, and combinations of acetic and phosphoric acid. After making, the cheese was checked for the firmness and functionality on pizza pie using the same criteria outlined in example 8.

The results of this example are presented in TABLE 10. It clearly proves that the firmness of the cheese was greatly improved by raising the concentration of coccus in relationship to rods. However to arrive at average properties it is preferable to adjust the ratios to 3:1 to 6:1 with our current proposed procedure. Excellent mozzarella cheese with good functionality was made using a combination of acetic and phosphoric acid with a 10:1 coccus to rod ratio.

## TABLE 10

| No. | Type of Acid Used to Acidify Milk | Coccus to Rod Ratio | Body of the Cheese | Functionality of the Cheese on Pizza Pie: | | | | |
|---|---|---|---|---|---|---|---|---|
| | | | | Melt | Browning | Oiling-Off | Stretch | Chewiness |
| 1 | None | 1:1 | Weak and Pasty | Poor | Excessive | Distinct | Poor | Slightly Chewy |
| 2 | None | 10:1 | Slightly Firm | Poor | Excessive | Average | Poor | Extremely Chewy |
| 3 | Acetic Acid | 1:1 | Weak | Good | Slight | Distinct | Good | Too Tender |
| 4 | Acetic Acid | 10:1 | Firm | Very Good | Medium | None | Excellent | None |
| 5 | Phosphoric Acid | 1:1 | Slightly Firm | Average | Slight | None | Good | Slightly Tender |
| 6 | Phosphoric Acid | 10:1 | Extremely Firm | Average | Medium | None | Excellent | None |
| 7 | Acetic (50%) & Phosphoric (50%) | 1:1 | Slightly Firm | Good | Slight | None | Excellent | None |
| 8 | Acetic (50%) Phosphoric (50%) | 10:1 | Extremely Firm | Good | Medium | None | Excellent | None |

Example 11 - - The effect of various acids and combinations of acids on the cheese fines, firmness, and functionality of the cheese was investigated. The cheese make procedure followed was the same as in example 10, except for the following:

1. The coccus to rod ratio was adjusted to 3 to 5:1.

2. Three different acetic and phosphoric acid combinations were tried in addition to pure acids.

3. The preconditioning and post acidification were carried out using the same acid or acids combinations.

The results of these experiments are presented in TABLE 11. It is obvious from these data that phosphoric acid is far superior to acetic acid in terms of reducing the cheese fines and improving the quality of cheese. However, a combination of 75:25 of phosphoric: acetic yielded an excellent cheese too. So, the quality of cheese can be varied by varying the proportion of acids and coccus to rod ratios. This is

18

the novel aspect of this invention.

## TABLE 11

| No. | Combination of Acids | Amount of Fines Generated During Cheese Make | Body of the Cheese | Functionality of the Cheese on Pizza Pie: | | | | |
|---|---|---|---|---|---|---|---|---|
| | | | | Melt | Browning | Oiling-off | Stretch | Chewiness |
| 1 | Acetic Acid | Average | Average | Excellent | Slight | Slight | Excellent | None |
| 2 | Phosphoric Acid | Minimal | Extremely Firm | Average | Slight | None | Good | Slight Chewiness |
| 3 | Acetic Acid (25%) & Phosphoric Acid (75%) | Minimal | Extremely Firm | Average | Slight | None | Good | Slight Chewiness |
| 4 | Acetic Acid (50%) & Phosphoric Acid (50%) | Minimal | Firm | Excellent | Slight | None | Excellent | None |
| 5 | Acetic Acid (75%) & Phosphoric Acid (25%) | Average | Average | Excellent | Slight | None | Excellent | None |

EXAMPLE 12 - - Raw milk was adjusted to 2.1% milkfat and preconditioned by injecting 80% acetic acid into a flowing stream utilizing a metering pump, inline injector and inline mixer to achieve pH 6.2. The milk was subjected to pasteurization at 174.2°F (79°C) for 16 sec. and cooled to 73°F (22.8°C). The preconditioned milk was post acidified to pH 5.68 using a 50:50 mixture of 80% acetic acid and 85% phosphoric acid, inoculated with a rod and coccus starter culture, warmed to 90°F (32.3°C) and set with 1 oz. (28 g) of rennet per 1,000 pounds (454 kg) of milk. Subsequent cheese manufacture was substantially according to traditional procedure for mozzarella cheese.

Analysis of subsequent whey samples at the end of cooking revealed a fat content of 0.20% and a

19

soluble whey protein content of 0.46% as compared to 0.42% and 0.67% respectively for the control vat whey. This analysis supports a cheese yield increase when the milk is preconditioned to pH 6.2 and when the heat treatment is elevated only to 174.2°F (79°C).

EXAMPLE 13 - - This example demonstrates the production of cottage cheese by this invention. Forty gallons (182 ℓ) of skim milk at 42°F (5.6°C) were placed in a jacketed stainless steel tank and preconditioned to pH 6.4 using 85% acetic acid as the conditioner. The preconditioned milk was heated rapidly to 183°F (83.9°C) with no holding time and cooled rapidly 90°F (32.2°C). It was then post acidified to pH 5.5 by injecting a 37.5% phosphoric acid solution into the flowing milk stream using an inline injector and static mixer and delivered into the cheese vat.

The vat skim, at 90°F (32.2°C) and pH 5.5, was inoculated at the rate of 3% with a lactic culture which had been grown in a phage resistant medium. A ripening time of 130 minutes was required for the culture to bring the pH down to 5.0. Setting was accomplished by adding 22ml. of single strength rennet, diluted in water. A smooth, shiny, cuttable coagulum developed in 90 minutes. After cutting into 3/8th inch (0.95 cm) cubes the curd was allowed to remain quiescent for 20 minutes while whey expulsion was initiated.

Thirty-eight ml. of 75% phosphoric acid were distributed on top of the whey and cooling with gentle agitation was begun. The curds were cooked to 127°F (52.8°C) in the usual manner, the whey was drained, and the curds were washed three times in progressively colder changes of water.

The washed and drained curds were dressed with a cottage cheese dressing. Both the dry curds and the dressed curds appeared normal in flavor, body and texture. The whey contained 0.52% soluble protein as compared to the 0.70% for the control vat made in the usual manner by direct acidification.

EXAMPLE 14 - - This example demonstrate the production of direct set cottage cheese by this invention. Forty gallon (182 ℓ) of skim milk at 45°F (7.2°C) were placed in a stainless steel jacketed tank and preconditioned to pH 6.3 using 75% phosphoric acid as the conditioner. The preconditioned milk was heated as rapidly as possible to 180°F (82.2°C) and then cooling was started immediately to adjust the temperature to 70°F (21.1°C) The preconditioned, high heat treated and cooled skim milk was post acidified to pH 5.25 by injecting into the flowing milk stream a controlled amount of 75% phosphoric acid. An inline static mixer was used to facilitate thorough mixing without protein precipitation. The post acidified skim milk was delivered into a cheese vat and warmed with agitation to 88°F (31.1°C)

The acidified skim milk was then set by adding 12 ml. of microbial coagulator and 995 g. of the acidogen glucono-delta-lactone, stirring for one minute and then allowing the mixture to set quiescently for 75 minutes. At the end of the setting time a smooth, shiny coagulum with a pH of 4.68 had formed.

Stainless steel cheese knives were used to cut the coagulum into 3/8th inch (0.95 cm) cubes which were allowed to contract for about 30 minutes before cooking was begun. Forty-two ml. of 75% phosphoric acid was distributed over the surface of the whey, to lower the cooking pH to 4.4-4.5, the steam was turned on and cooking was initiated with gentle hand stirring. The curd was cooked out in the usual manner to 134°F (56.7°C), the whey drained and the curd was washed 3 times with progressively colder water. The washed and drained curd was normal in body, texture and flavor as both a dry curd and as a dressed curd. Although the finished curd was not weighed to determine yield, a decrease in whey protein from 0.78% in the control to 0.53% in this vat strongly support a yield increase with no loss in cheese quality, just as was experienced with mozzarella.

EXAMPLE 15 - - Cheddar cheese was made in this example to demonstrate the application of this invention to cheeses other than mozzarella.

Forty gallons (182 ℓ) of milk containing 3.4% milkfat were placed in a round, jacketed processing tank equipped with steam heating and cold water cooling. The cold milk at 42°F (5.6°C) was preconditioned to pH 6.3 using an 85% solution of acetic acid and then heated rapidly to 182°F (83.3°C) and cooled with no holding time. After cooling to 90°F (32.3°C), the milk was post acidified to pH 5.6 by injecting 75% phosphoric acid into a flowing stream of milk using an inline injector and static mixer to accommodate acidification without protein precipitation as the milk flowed into the cheese vat.

The acidified milk (pH 5.6) in the vat was inoculated with 1.5% lactic starter culture which had been grown in a phage resistant medium. A ripening time of 45 minutes was allowed before addition of 22 ml. of single strength microbial coagulator. After a setting time of 35 minutes a smooth, shiny coagulum was formed. The coagulum was cut with 1/4 inch (0.64cm) cheese knives, allowed to contract for 10 minutes and cooked to 104°F (40°C) during 40 minutes of constant agitation. The curd was allowed to fall, the whey was drained and the "packing" or matting stage was performed. The matted cheese was cut into slabs and cheddared until it reached pH 5.3. The slabs then were cut into strips using a knife, salted and crudely pressed in a cylindrical metal hoop overnight. The stretch of the slabs during cheddaring was normal and the cheese, after pressing, appeared normal except for few mechanical openings. The soluble protein content of the whey was 0.45% reflecting an increased cheese yield.

# EP 0 312 359 B1

**Claims**

1. A method of making cheese which includes the steps of:
   a) where necessary, preconditioning cold, raw milk by lowering the pH to between 6.0 to 6.5 prior to heat treating;
   b) heat treating the said milk at a temperature from 162° to 190°F (72.2° to 87.8°C); and
   c) post acidifying the milk prior to inoculating with a starter culture or acidogen or a slow release acidulant.

2. A method of making cheese as claimed in claim 1, wherein milk is heat treated, inoculated with starter culture, ripened, and treated with a coagulating agent to form a curd after which the curd is cut, cooked, and according to the type of cheese being produced, is cheddared or pressed, or mixed and molded to form cheese bodies, which method includes the steps of:
   a) preconditioning cold, raw milk by lowering the pH to between 6.0 and 6.5 prior to heat treating;
   b) subsequently heat treating the preconditioned milk to a temperature from 162° to 190°F (72.2° to 87.8°C);
   c) cooling the heat treated milk; and
   d) post-acidifying the cooled milk prior to inoculating with starter culture.

3. A method as claimed in claim 1 or claim 2, wherein said preconditioning step is performed by acidifying the milk to pH 6.3 to 6.5.

4. A method as claimed in any one of the preceding claims, wherein said preconditioning step and/or said post acidifying step are performed by adding a substance selected from the group consisting of acetic acid, phosphoric acid, vinegar, lactic acid, and a natural organic acid or a bacterial acid present in milk based or other food based products.

5. A method as claimed in any one of the preceding claims, wherein said preconditioning step is carried out by pumping an acidifying substance into the milk while the milk is under agitation.

6. A method as claimed in any one of the preceding claims, wherein said heat treating step is carried out at a temperature from 162° to 185°F (72.2° to 85°C) for a time of approximately sixteen seconds.

7. A method as claimed in any one of claims 1 to 5, wherein the milk is held at a selected temperature for from 16 seconds to 2 minutes during said heat treating step.

8. A method as claimed in any one of the preceding claims, wherein said cooling step is carried out at a temperature from 60° to 100°F (15.6° to 37.8°C)

9. A method as claimed in any one of the preceding claims, wherein said post-acidifying step is carried out to a pH of from 4.9 to 6.0.

10. A method as claimed in claim 9, wherein said post-acidifying step is carried out to a pH of from 5.65 to 5.70.

11. A method as claimed in any one of the preceding claims, wherein the starter culture added comprises one or more of Streptococcus thermophilus, Lactobacillus bulgaricus, Streptococcus lactis and Steptococcus cremoris.

12. A method as claimed in any one of the preceding claims, wherein the starter culture added has a coccus to rod ratio of from 2:1 to 10:1.

13. A method as claimed in any one of the preceding claims, wherein, the inoculated milk is ripened for about 15 minutes to 45 minutes and is coagulated using about 0.5 to 3.0 ounces (14.2 to 85.2 g) of coagulant per 1000 lbs. (454 kg) of milk.

14. A method of making Cottage cheese, wherein milk is heat treated, inoculated with starter culture, ripened to form a curd, after which the curd is cut, cooked, and dressed with Cottage cheese dressing,

21

which method includes the steps of:

a) preconditioning cold, skim milk by lowering the pH to approximately 6.1 to 6.5;

b) heat treating the preconditioned milk by raising the temperature to from 165° to 190°F (73.9° to 87.8°C) for approximately 16 seconds; and

c) post-acidifying the heat treated milk by lowering the pH to approximately 5.2 to 5.9.

15. A modification of a method as claimed in claim 14, wherein post-acidification is conducted by lowering the pH of milk to from 4.95 to 5.5; and the post-acidified milk is inoculated with an acidogen or a slow release acidulant selected from the group consisting of gluconodelta-lactone and an encapsulated organic or inorganic acid.

16. A method of making cheese as claimed in claim 1, wherein milk is heat treated, inoculated with starter culture, ripened, and treated with a coagulating agent to form a curd, after which the curd is cut, cooked, and then cheddared, or pressed, or mixed and molded to form cheese bodies, which method include the steps of:

a) selecting a raw milk having a pH of 6.0 to 6.5;

b) subsequently heat treating the raw milk at a temperature from 162° to 190°F (72.2° to 87.8°C)

c) cooling the heat treated milk; and

d) post-acidifying the cooled milk prior to inoculating with starter culture.

17. A method as claimed in claim 16 wherein said post-acidifying step is carried out to a pH of from 4.9 to 6.0, preferably 5.65 to 5.70, and wherein the cheese is a pasta filata type.

**Patentansprüche**

1. Verfahren zur Herstellung von Käse, welches die folgenden Stufen umfaßt:

(a) erforderlichenfalls die Präkonditionierung von kalter, roher Milch durch Erniedrigung des pH auf einen Wert zwischen 6,0 und 6,5 vor der Wärmebehandlung;

(b) die Wärmebehandlung dieser Milch bei einer Temperatur von 162 bis 190°F (72,2 bis 87,8°C); und

(c) die Nachsäuerung der Milch vor dem Impfen mit einer Starterkultur oder Acidogen oder einem Ansäuerungsmittel mit verzögerter Freisetzung.

2. Verfahren zur Herstellung von Käse gemäß Anspruch 1, bei dem Milch wärmebehandelt, mit einer Starterkultur geimpft, einer Reifung unterzogen und mit einem Koagulierungsmittel behandelt wird, um einen käsigen Niederschlag zu bilden, wonach der käsige Niederschlag geschnitten, gekocht und entsprechend dem Typ des herzustellenden Käses einem "cheddaring" unterzogen oder gepreßt oder gemischt und zur Bildung von Käsekörpern geformt wird, wobei das Verfahren die folgenden Stufen umfaßt:

(a) die Präkonditionierung von kalter, roher Milch durch Erniedrigung des pH auf einen Wert zwischen 6,0 und 6,5 vor der Wärmebehandlung;

(b) im Anschluß daran die Wärmebehandlung der präkonditionierten Milch auf eine Temperatur von 162 bis 190°F (72,2 bis 87,8°C);

(c) das Abkühlen der wärmebehandelten Milch; und

(d) die Nachsäuerung der abgekühlten Milch vor dem Impfen mit Starterkultur.

3. Verfahren gemäß Anspruch 1 oder 2, bei dem die Präkonditionierungsstufe durch Ansäuern der Milch auf einen pH von 6,3 bis 6,5 durchgeführt wird.

4. Verfahren gemäß einem der vorhergehenden Ansprüche, worin die Präkonditionierungsstufe und/oder die Nachsäuerungsstufe durchgeführt werden, indem man eine Substanz, ausgewählt unter Essigsäure, Phosphorsäure, Essig, Milchsäure und einer natürlichen organischen Säure oder einer bakteriellen Säure, welche in auf Milch basierenden oder anderen Nahrungsmitteln basierenden Produkten anwesend ist, zugibt.

5. Verfahren gemäß einem der vorhergehenden Ansprüche, worin die Präkonditionierungsstufe durchgeführt wird, indem man eine ansäuernde Substanz in die Milch pumpt, während die Milch sich unter Rühren befindet.

EP 0 312 359 B1

**6.** Verfahren gemäß einem der vorhergehenden Ansprüche, worin die Wärmebehandlungsstufe bei einer Temperatur von 162 bis 185°F (72,2 bis 85°C) während einer Zeitdauer von etwa 16 Sekunden durchgeführt wird.

**7.** Verfahren gemäß einem der Ansprüche 1 bis 5, worin die Milch für 16 Sekunden bis 2 Minuten während dieser Wärmebehandlungsstufe bei einer gewählten Temperatur gehalten wird.

**8.** Verfahren gemäß einem der vorhergehenden Ansprüche, worin die Kühlungsstufe bei einer Temperatur von 60 bis 100°F (15,6 bis 37,8°C) durchgeführt wird.

**9.** Verfahren gemäß einem der vorhergehenden Ansprüche, worin die Nachsäuerungsstufe bei einem pH von 4,9 bis 6,0 durchgeführt wird.

**10.** Verfahren gemäß Anspruch 9, worin die Nachsäuerungsstufe bei einem pH von 5,65 bis 5,70 durchgeführt wird.

**11.** Verfahren gemäß einem der vorhergehenden Ansprüche, worin die zugesetzte Starterkultur eine oder mehrere von Streptococcus thermophilus, Lactobacillus bulgaricus, Streptococcus lactis und Streptococcus cremoris umfaßt.

**12.** Verfahren gemäß einem der vorhergehenden Ansprüche, worin die zugesetzte Starterkultur ein Coccus-zu-Stab-Verhältnis von 2:1 bis 10:1 aufweist.

**13.** Verfahren gemäß einem der vorhergehenden Ansprüche, worin die geimpfte Milch etwa 15 Minuten bis 45 Minuten einer Reifung unterzogen und unter Verwendung von etwa 0,5 bis 3,0 Unzen (14,2 bis 85,2 g) Koagulans je 1000 lbs (454 kg) Milch koaguliert wird.

**14.** Verfahren zur Herstellung von Hüttenkäse, bei dem die Milch wärmebehandelt, mit einer Starterkultur geimpft, zur Bildung eines käsigen Niederschlags einer Reifung unterzogen wird, wonach der käsige Niederschlag geschnitten, gekocht und mit Hüttenkäsedressing zubereitet wird, welches Verfahren die folgenden Stufen umfaßt:
(a) die Präkonditionierung von kalter Magermilch durch Herabsetzen des pH auf etwa 6,1 bis 6,5;
(b) die Wärmebehandlung der präkonditionierten Milch durch Erhöhen der Temperatur auf einen Wert von 165 bis 190°F (73,9 bis 87,8°C) während etwa 16 Sekunden; und
(c) die Nachsäuerung der wärmebehandelten Milch durch Erniedrigung des pH auf etwa 5,2 bis 5,9.

**15.** Abänderung eines Verfahrens gemäß Anspruch 14, worin die Nachsäuerung durchgeführt wird, indem man den pH der Milch auf einen Wert von 4,95 bis 5,5 erniedrigt; und die nachgesäuerte Milch mit einem Acidogen oder einem Ansäuerungsmittel für die verzögerte Freigabe, ausgewählt unter Glucono-delta-lacton und einer verkapselten organischen oder anorganischen Säure, geimpft wird.

**16.** Verfahren zur Herstellung von Käse gemäß Anspruch 1, worin Milch wärmebehandelt, mit Starterkultur geimpft, einer Reifung unterzogen und zur Bildung eines käsigen Niederschlags mit einem Koagulierungsmittel behandelt wird, wonach der käsige Niederschlag geschnitten, gekocht und hiernach einem "cheddaring" unterzogen oder gepreßt oder gemischt und zur Bildung von Käsekörpern geformt wird, welches Verfahren die folgenden Stufen umfaßt:
(a) Auswählen einer Rohmilch mit einem pH von 6,0 bis 6,5;
(b) anschließend die Wärmebehandlung der Rohmilch bei einer Temperatur von 162 bis 190°F (72,2 bis 87,8°C);
(c) das Abkühlen der wärmebehandelten Milch; und
(d) die Nachsäuerung der abgekühlten Milch vor dem Impfen mit Starterkultur.

**17.** Verfahren gemäß Anspruch 16, worin die Nachsäuerungsstufe auf einen pH von 4,9 bis 6,0, vorzugsweise 5,65 bis 5,70, durchgeführt wird und worin der Käse einer vom Pasta filata-Typ ist.

**Revendications**

**1.** Procédé de fabrication de fromage qui comprend les stades de :

23

a) si nécessaire, préconditionnement de lait cru froid, en abaissant le pH entre 6,0 et 6,5, avant un traitement thermique ;

b) traitement thermique du lait à une température de 162° à 190°F (72,2° à 87,8°C) ; et

c) post-acidification du lait avant une inoculation par une culture starter ou par un acidogène ou par un acidulant à libération lente.

2. Procédé de fabrication du fromage suivant la revendication 1, qui consiste à traiter thermiquement du lait, à l'inoculer par une culture starter, à l'affiner et à le traiter par un agent coagulant, pour former un caillé, puis à découper le caillé, à le cuire et, suivant le type de fromage à produire, à le chéddariser ou à le presser ou à le mélanger et à le mouler pour former des pièces de fromage, ce procédé comprenant les stades de :

a) préconditionnement de lait cru froid, en abaissant le pH entre 6,0 et 6,5 avant un traitement thermique ;

b) traitement thermique ultérieur du lait préconditionné, à une température de 162° à 190°F (72,2° à 87,8°C) ;

c) refroidissement du lait traité thermiquement ; et

d) post-acidification du lait refroidi, avant de l'inoculer par une culture starter.

3. Procédé suivant la revendication 1 ou 2, qui consiste à effectuer le stade de préconditionnement en acidifiant le lait à un pH de 6,3 à 6,5.

4. Procédé suivant l'une quelconque des revendications précédentes, qui consiste à effectuer le stade de préconditionnement et/ou le stade de post-acidification en ajoutant une substance choisie parmi l'acide acétique, l'acide phosphorique, le vinaigre, l'acide lactique et un acide organique naturel, ou un acide bactérien présent dans des produits à base du lait ou dans des produits à base d'une autre denrée alimentaire.

5. Procédé suivant l'une quelconque des revendications précédentes, qui consiste à effectuer le stade de préconditionnement en pompant une substance acidifiante dans le lait, pendant que le lait est sous agitation.

6. Procédé suivant l'une quelconque des revendications précédentes, qui consiste à effectuer le stade de traitement thermique à une température de 162° à 185°F (72,2° à 85°C) pendant une durée de seize secondes environ.

7. Procédé suivant l'une quelconque des revendications 1 à 5, qui consiste à maintenir le lait à une température donnée pendant 16 secondes à 2 minutes, pendant le stade de traitement thermique.

8. Procédé suivant l'une quelconque des revendications précédentes, qui consiste à effectuer le stade de refroidissement à une température de 60° à 100°F (15,6° à 37,8°C).

9. Procédé suivant l'une quelconque des revendications précédentes, qui consiste à effectuer le stade de post-acidification à un pH de 4,9 à 6,0.

10. Procédé suivant la revendication 9, qui consiste à effectuer le stade de post-acidification à un pH de 5,65 à 5,70.

11. Procédé suivant l'une quelconque des revendications précédentes, dans lequel la culture starter ajoutée comprend un ou plusieurs de Streptococcus thermophilus, Lactobacillus bulgaricus, Streptococcus lactis et Streptococcus cremoris.

12. Procédé suivant l'une quelconque des revendications précédentes, dans lequel la culture starter ajoutée a un rapport de coque à bâtonnet de 2:1 à 10:1.

13. Procédé suivant l'une quelconque des revendications précédentes, qui consiste à affiner le lait inoculé pendant 15 minutes à 45 minutes environ et à le coaguler en utilisant de 0,5 à 3,0 onces (14,2 à 85,2 g) de coagulant par 1000 livres (454 kg) de lait.

**14.** Procédé de fabrication de Cottage cheese, qui consiste à traiter thermiquement du lait, à l'inoculer par une culture starter, à l'affiner pour former un caillé, puis à découper le caillé, à le cuire et à l'assaisonner par un assaisonnement de Cottage cheese, ce procédé comprenant les stades de :

a) préconditionnement de lait écrémé froid, en abaissant le pH entre 6,1 et 6,5 environ ;

b) traitement thermique du lait préconditionné en portant sa température entre 165° et 190°F (73,9° à 87,8°C) pendant 16 secondes environ ; et

c) post-acidification du lait traité thermiquement en abaissant le pH entre 5,2 et 5,9 environ.

**15.** Variante du procédé suivant la revendication 14, qui consiste à effectuer la post-acidification en abaissant le pH du lait entre 4,95 et 5,5 ; et à inoculer le lait post-acidifié par un acidogène ou par un acidulant à libération lente choisi parmi la glucono-delta-lactone et un acide organique ou minéral encapsulé.

**16.** Procédé de fabrication de fromage suivant la revendication 1, qui consiste à traiter thermiquement du lait, à l'inoculer par une culture starter, à l'affiner et à le traiter par un agent de coagulation pour former un caillé, puis à découper le caillé, à le cuire et à le chéddariser, ou à le presser ou à le mélanger ou à le mouler pour former des pièces de fromage, ce procédé comprenant les stades de :

a) sélection d'un lait cru ayant un pH de 6,0 à 6,5;

b) traitement thermique ultérieur du lait cru à une température de 162° à 190°F (72,2° à 87,8°C) ;

c) refroidissement du lait traité thermiquement ; et

d) post-acidification du lait refroidi avant de l'inoculer par une culture starter.

**17.** Procédé suivant la revendication 16, qui consiste à effectuer le stade de post-acidification à un pH de 4,9 à 6,0 et, de préférence, de 5,65 à 5,70, le fromage étant du type pasta filata.